# FASCICULE DE BREVET EUROPEEN

(11) **EP 4 134 255 B1**
(45) Date de publication et mention de la délivrance du brevet: **15.05.2024**
(21) Numéro de dépôt: 22183469.0
(22) Date de dépôt: 07.07.2022
(51) Int. Cl.: B60G 3/20, B60G 7/00, B60G 7/02, B62D 7/06, B62D 7/14

(54) **TRAIN ARRIERE DE VEHICULE AUTOMOBILE, NOTAMMENT A ROUES DIRECTRICES**
HINTERACHSE EINES KRAFTFAHRZEUGS, INSBESONDERE MIT GELENKTEN RÄDERN
REAR END OF A MOTOR VEHICLE, IN PARTICULAR WITH STEERING WHEELS

(30) Priorité: 12.08.2021 FR 2107553
(43) Date de publication de la demande: 15.02.2023
(73) Titulaire: Renault s.a.s, 92100 Boulogne Billancourt (FR)
(72) Inventeur: Rollet, Rémi, 78084 GUYANCOURT CEDEX (FR)

(56) Documents cités:
- EP-A1- 0 520 870
- EP-A2- 0 306 625
- EP-A2- 0 849 103
- DE-A1- 3 331 282
- DE-A1-102013 224 089
- FR-A1- 3 055 878
- US-A- 5 597 171

## Description

L'invention a pour objet un train arrière de véhicule automobile, et plus particulièrement un train arrière à roues directrices.

Le document FR3044592 décrit un train arrière à roues directrices comportant un porte-fusée monté pivotant sur un bras longitudinal. Le bras longitudinal est en outre relié au châssis du côté de son extrémité arrière par une liaison en parallélogramme comportant deux bielles, une bielle inférieure supportant l'amortisseur et le ressort de suspension du train et une bielle supérieure. La place disponible pour réaliser la liaison pivot entre le porte-fusée et le bras longitudinal est toutefois très réduite, ce qui rend le dessin difficile et peut conduire à des pièces coûteuses. Par ailleurs, l'articulation avant du bras longitudinal au châssis subit des efforts transversaux en virage rendant plus difficile la filtration de ces efforts par l'articulation. Ceci peut nécessiter plus de place dans la zone de l'articulation déjà fortement contrainte.

Le document EP 0 849 103 décrit un train arrière selon le préambule de la revendication 1.

Il existe donc un besoin pour réaliser un train arrière qui soit plus simple à fabriquer.

A cet effet, l'invention propose un train arrière de véhicule automobile comportant :
- au moins un bras longitudinal comportant une extrémité avant pourvue d'une articulation d'axe sensiblement transversal destinée à être montée sur un châssis du véhicule,
- au moins un porte-fusée et une roue arrière associée, le porte-fusée portant la roue arrière à rotation autour d'un axe sensiblement transversal,
- une structure de liaison comportant un bras inférieur transversal et un bras supérieur transversal, chaque bras comportant une première articulation le reliant au porte-fusée et une deuxième articulation destinée à le relier au châssis du véhicule.

Selon l'invention, une extrémité arrière du bras longitudinal est montée pivotante sur une extrémité avant du porte-fusée, la première articulation du bras inférieur est reliée à une extrémité supérieure du porte-fusée par une biellette et le bras inférieur est relié à une extrémité inférieure du porte-fusée par une troisième articulation située en avant de la droite définie par ses première et deuxième articulations, cette troisième articulation (63) reliant uniquement le bras inférieur (6) au porte-fusée (3).

Ainsi, la première articulation du bras inférieur est reliée indirectement au porte-fusée via la biellette, alors que sa troisième articulation est reliée directement au porte-fusée. Typiquement, le bras supérieur est relié directement au porte-fusée. Cet agencement particulier permet de séparer les fonctions de guidage et de suspension du bras inférieur transversal. En effet, la troisième articulation du bras inférieur subit essentiellement des efforts transversaux alors que la première articulation du bras inférieur reliée à la biellette subit essentiellement des efforts verticaux. Ainsi, les efforts de suspension sont repris par la biellette reliant la première articulation du bras inférieur au porte-fusée, alors que les efforts de guidage sont repris par la troisième articulation.

On notera que le train arrière selon l'invention présente avantageusement uniquement un bras inférieur, aussi appelé bras transversal porteur dans la mesure où il supporte le ressort de suspension et l'amortisseur et un bras supérieur, aussi appelé bielle de carrossage, et peut être typiquement pourvu d'une bielle de direction (ou bielle de pince) située en arrière du bras porteur et de la bielle de carrossage, en remplacement de la bielle de pince équipant souvent ce type de train et reliant habituellement le porte-fusée au châssis du véhicule en avant du bras porteur et de la bielle de carrossage.

Les bras inférieur et supérieur peuvent avantageusement être positionnés de sorte que le point d'intersection d'un axe de pivot, passant par la première articulation du bras supérieur et la troisième articulation du bras inférieur, avec le sol soit dans une zone située de 20 à 60 mm en arrière du point de contact de la roue arrière sur le sol, dans une position d'utilisation à vide du train arrière lorsque ce dernier est monté dans un véhicule. Ceci permet de faire braquer les roues, notamment pour un train arrière à quatre roues directrices, sans que les bras, et en particulier un actionneur relié à la bielle de direction, ne subissent d'efforts trop importants en virage.

Le train arrière selon l'invention peut comprendre une ou plusieurs des caractéristiques suivantes :
- la biellette s'étend sensiblement verticalement,
- la biellette est reliée au porte-fusée et au bras inférieur par des articulations élastiques,
- le bras longitudinal présente une forme arquée vue de dessus dont la concavité est située du côté de la roue arrière,
- l'extrémité arrière du bras longitudinal est reliée à l'extrémité avant du porte-fusée par au moins une articulation d'axe sensiblement vertical,
- le train arrière comporte une bielle de direction dont une première extrémité est montée pivotante sur une extrémité arrière du porte-fusée, une deuxième extrémité de la bielle de direction peut alors soit être reliée à un actionneur, soit être destinée à être reliée au châssis du véhicule,
- le train arrière comporte un actionneur commandant le déplacement de la bielle de direction pour commander le pivotement du porte-fusée,
- le train arrière comporte un arbre moteur pour entraîner la roue arrière en rotation.

L'invention a également pour objet un véhicule automobile à quatre roues directrices comportant un train arrière comportant une bielle de direction et un arbre moteur.

L'invention est maintenant décrite en référence aux dessins annexés, non limitatifs, dans lesquels :
[Fig. 1] La figure 1 représente schématiquement vue de dessus un train arrière selon l'invention.
[Fig. 2] La figure 2 est un schéma cinématique qui représente le train arrière de la figure 1.
[Fig. 3] La figure 3 représente schématiquement selon la direction transversale une roue arrière et son axe de pivot.
[Fig. 4] La figure 4 représente schématiquement selon la direction longitudinale une roue arrière et son axe de pivot.

Dans la présente description, les termes avant, arrière, supérieur, inférieur, font référence aux directions avant et arrière du véhicule ou du train arrière, lorsque ce dernier est monté sur le véhicule, autrement dit en position d'utilisation du train arrière. Les axes X, Y, Z, correspondent respectivement à l'axe longitudinal (d'avant en arrière), transversal et vertical du véhicule, ce dernier reposant sur le sol, ou du train arrière en position d'utilisation. La direction verticale correspond ainsi à la direction de la gravité. Les directions longitudinale et transversale sont situées dans un plan horizontal lorsque le véhicule repose, notamment à vide, sur un sol horizontal (perpendiculaire à la direction verticale).

Par sensiblement longitudinal, transversal, ou vertical, on entend une direction/un plan formant un angle d'au plus ±20°, voire d'au plus ±10° ou d'au plus ±5°, avec une direction/un plan longitudinal, transversal, ou vertical.

Sur les figures, seule est représentée la partie latérale gauche d'un train arrière 1 de véhicule automobile, le train arrière présentant une symétrie en miroir par rapport à un plan vertical longitudinal, médian transversalement, du véhicule. La description de la partie latérale gauche est ainsi applicable par symétrie à une partie latérale droite du train arrière 1 portant une roue arrière droite du véhicule. La partie latérale gauche du train arrière 1 présente une roue arrière 2 portée par un porte-fusée 3 à rotation autour d'un axe sensiblement transversal 2A.

Le porte-fusée 3 est relié au châssis 4 d'un véhicule par un dispositif de liaison articulée. Ce dernier comporte notamment un bras longitudinal 5 d'axe globalement longitudinal, qui s'étend depuis une extrémité avant 51 jusqu'à une extrémité arrière 52. L'extrémité avant 51 est pourvue d'une articulation 53 d'axe 5A sensiblement transversal destinée à être montée sur le châssis 4 du véhicule et permettant ainsi le pivotement du bras longitudinal 5 par rapport au châssis. Cette articulation 53 est par exemple une articulation élastique.

L'extrémité arrière 52 du bras longitudinal est quant-à-elle montée pivotante sur une extrémité avant 31 du porte-fusée 3, située en avant (longitudinalement) de l'axe de rotation 2A de la roue arrière 2. Cette extrémité arrière 52 est par exemple reliée à l'extrémité avant du porte-fusée par deux articulations 54 formant un axe de rotation 5B sensiblement vertical.

Dans le mode de réalisation représenté, le bras longitudinal 5 présente une forme arquée vue de dessus, dont la concavité est située du côté de la roue arrière 2 évitant toute interférence entre le bras longitudinal 5 et la roue arrière 2 lors de son pivotement.

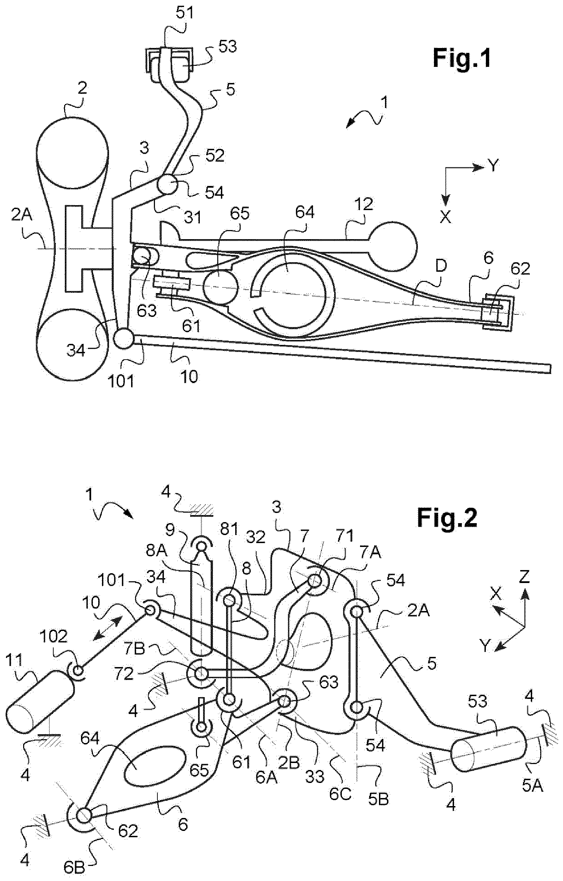

Le dispositif de liaison de la partie latérale gauche comporte en outre une structure de liaison destinée à relier de manière articulée le porte-fusée 3 au châssis. Cette structure de liaison comprend deux bras transversaux : un bras inférieur 6 et un bras supérieur 7 (ce dernier n'est pas représenté sur la figure 1 pour des raisons de clarté). Les bras inférieur et supérieur s'étendent suivant une direction sensiblement transversale. Leur forme est généralement non strictement transversale et/ou rectiligne, notamment en raison de la place disponible. Chaque bras 6, 7 comporte une première articulation 61, 71 la reliant au porte-fusée 3 et une deuxième articulation 62, 72 destinée à la relier au châssis 4 du véhicule. Ces articulations sont généralement disposées à des extrémités des bras, ou à proximité de ces extrémités. Ces articulations sont typiquement des articulations élastiques.

Le bras inférieur 6 est monté pivotant sur le châssis 4 via la deuxième articulation 62 autour d'un axe sensiblement longitudinal 6B. La première articulation 61, assurant ici un pivotement du bras inférieur 6 autour d'un axe sensiblement longitudinal 6A, est reliée à une extrémité supérieure 32 du porte-fusée 3 par une biellette 8. Cette dernière est ici montée à pivotement sur le porte-fusée 3 autour d'un axe sensiblement longitudinal 8A via une articulation 81, par exemple une articulation élastique.

La biellette 8 reliant le bras inférieur 6 à l'extrémité supérieure du porte-fusée s'étend sensiblement verticalement.

Le bras inférieur 6 est également relié à une extrémité inférieure 33 du porte-fusée 3, notamment directement, par une troisième articulation 63 située en avant (longitudinalement) de la droite D définie par ses première et deuxième articulations 61, 62. Cette troisième articulation 63 autorise également un pivotement autour d'un axe 6C sensiblement longitudinal.

Le bras longitudinal et le bras inférieur sont des pièces distinctes. Par conséquent, la troisième articulation (63) relie uniquement le bras inférieur (6) au porte-fusée (3).

Le bras inférieur 6 présente en outre une zone 64 servant de réception à un ressort de suspension et une zone 65 de fixation d'un amortisseur 9. La position en avant (longitudinalement) de la troisième articulation 63 permet ainsi de reculer le bras inférieur 6 vers l'arrière du train arrière 1, libérant ainsi suffisamment de place pour faire passer un arbre moteur 12 transversal, tel que décrit plus bas, sans interférence avec le ressort de suspension.

Le bras supérieur 7 est monté pivotant sur le châssis et sur le porte-fusée autour d'axes sensiblement longitudinaux 7A, 7B par ses articulations 71, 72 respectivement. Ces articulations sont généralement également des articulations élastiques. Le bras supérieur 7 s'étend sensiblement au dessus du bras inférieur 6.

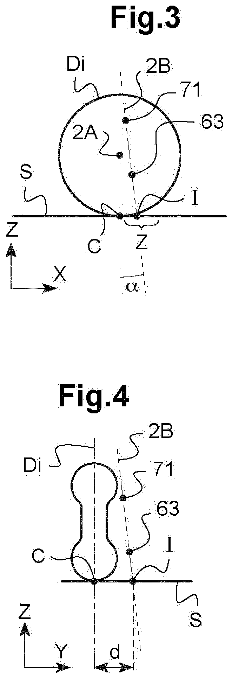

Ainsi, avec cette configuration de la structure de liaison, la roue arrière 2 pivote sensiblement en braquage autour d'un axe de pivot 2B passant par la première articulation 71 du bras supérieur et la troisième articulation 63 du bras inférieur. Cet axe de pivot 2B coupe le sol S en un point d'intersection I dans une zone Z située de 20 à 60 mm en arrière du point de contact C de la roue arrière sur le sol, dans une position d'utilisation à vide du train arrière lorsque ce dernier est monté dans un véhicule, tel que représenté figure 3. Le point de contact C de la roue arrière sur le sol est défini comme l'intersection d'un disque Di avec le sol S, ce disque Di, de même diamètre que la roue et tangent avec le sol, s'étendant dans un plan médian de la roue, perpendiculairement à l'axe 2A de celle-ci. Typiquement, cet axe de pivot 2B peut former un angle alpha (α) de 0 à 20° avec une direction verticale, cet angle étant mesuré dans un plan vertical longitudinal, dans une position d'utilisation à vide du train arrière lorsque ce dernier est monté dans un véhicule, les roues étant droites.

Tel que représenté figure 4, le point d'intersection I de cet axe de pivot 2B avec le sol S peut être décalé transversalement d'une distance d de 0 à 100mm, typiquement de 50 à 100mm environ par rapport au point C.

Pour permettre de commander le pivotement de la roue arrière 2 autour de cet axe de pivot 2B, une bielle de direction 10 est reliée au porte-fusée 3.

Typiquement, une première extrémité 101 de la bielle de direction 10 est montée pivotante sur une extrémité arrière 34 du porte-fusée 3, par exemple par une liaison rotule, cette extrémité arrière 34 étant située en arrière de l'axe de pivot 2B. La bielle de direction 10 s'étend ici transversalement. La deuxième extrémité 102 de cette bielle de direction 10 peut être reliée à un actionneur 11 qui va commander le déplacement de la bielle de direction 10. Cette deuxième extrémité 102 est ici montée coulissante transversalement par rapport au châssis 4 par l'intermédiaire d'une liaison à pivot coulissant, ce coulissement étant commandé par l'actionneur 11 afin de faire pivoter le porte-fusée d'un angle déterminé, typiquement de plus ou moins 5° par rapport à une direction longitudinale.

On notera que la bielle de direction 10 peut ne pas être commandée par l'actionneur 11 : sa deuxième extrémité 102 est alors reliée directement au châssis, typiquement par une articulation. La bielle de direction 10 forme alors une bielle de pince.

Enfin, dans le cas d'un véhicule à propulsion ou à quatre roues motrices, le train arrière 1 comporte un arbre moteur 12 transversal pour entraîner la roue arrière 4 en rotation.

Le train arrière selon l'invention permet d'améliorer la tenue de route du véhicule dans les virages à grande vitesse en tournant dans le même sens que les roues avant du véhicule, mais d'un angle de pivotement moins important, pour tout type de véhicule. Dans le cas d'un véhicule à quatre roues directrices, le train selon l'invention rend le véhicule plus maniable à faible vitesse.

On notera que la structure de train arrière de l'invention est adaptable aussi bien à un véhicule à traction qu'à un véhicule à propulsion ou à un véhicule à quatre roues motrices.

Le train arrière 1 permet en outre de s'affranchir de la réalisation d'un pivot de porte-fusée indépendant, ce qui facilite le montage et abaisse le coût de fabrication. En outre, le point d'accroche du bras longitudinal sur le châssis subit peu ou pas d'efforts transversaux, facilitant la filtration des efforts subis par ce point d'accroche dans un encombrement restreint.

Enfin, la structure de train arrière selon l'invention permet d'optimiser le positionnement de l'axe de pivot de la roue arrière afin de réduire les efforts subis par la bielle de direction et donc l'actionneur lors du pivotement de la roue. Ceci permet notamment de réduire les exigences en termes de dimensionnement de l'actionneur (diminution de la taille et de la masse du moteur), ce qui permet de réduire les coûts de fabrication, la masse et la consommation de l'actionneur. En outre, la structure de train arrière selon l'invention permet de conserver la compatibilité architecturale entre l'arbre moteur de transmission 12 et le ressort de suspension appuyé en 64.

## Revendications

1. Train arrière (1) de véhicule automobile comportant :
- au moins un bras longitudinal (5) comportant une extrémité avant pourvue d'une articulation d'axe sensiblement transversal destinée à être montée sur un châssis du véhicule,
- au moins un porte-fusée (3) et une roue arrière (2) associée, le porte-fusée portant la roue arrière à rotation autour d'un axe sensiblement transversal (2A),
- une structure de liaison comportant un bras inférieur transversal (6) et un bras supérieur transversal (7), chaque bras comportant une première articulation (61, 71) le reliant au porte-fusée (3) et une deuxième articulation (62, 72) destinée à le relier au châssis (4) du véhicule,
- une extrémité arrière (52) du bras longitudinal étant eet- montée pivotante sur une extrémité avant (31) du porte-fusée,
- la première articulation (61) du bras inférieur étant reliée à une extrémité supérieure (32) du porte-fusée par une biellette (8) et
- le bras inférieur (6) étant eet- relié à une extrémité inférieure (33) du porte-fusée par une troisième articulation (63) située en avant d'une droite définie par ses première et deuxième articulations (61, 62), ledit train arrière étant **caractérisé en ce que** cette troisième articulation (63) relie uniquement le bras inférieur (6) au porte-fusée (3).

2. Train arrière (1) selon la revendication 1, **caractérisé en ce que** les bras inférieur (6) et supérieur (7) sont positionnés de sorte qu'un point d'intersection entre un axe de pivot (2B), passant par la première articulation (71) du bras supérieur et la troisième articulation (63) du bras inférieur, avec le sol soit dans une zone située de 20 à 60 mm en arrière du point de contact de la roue arrière sur le sol, dans une position d'utilisation à vide du train arrière lorsque ce dernier est monté dans un véhicule.

3. Train arrière (1) selon la revendication 1 ou 2, **caractérisé en ce que** la biellette (8) s'étend sensiblement verticalement.

4. Train arrière (1) selon l'une quelconque des revendications 1 à 3, **caractérisé en ce que** la biellette (8) est reliée au porte-fusée et au bras inférieur (6) par des articulations élastiques.

5. Train arrière (1) selon l'une quelconque des revendications 1 à 4, **caractérisé en ce que** le bras longitudinal (5) présente une forme arquée vue de dessus dont la concavité est située du côté de la roue arrière (2).

6. Train arrière (1) selon l'une quelconque des revendications 1 à 5, **caractérisé en ce que** l'extrémité arrière (52) du bras longitudinal est reliée à l'extrémité avant (31) du porte-fusée par au moins une articulation (54) d'axe sensiblement vertical.

7. Train arrière (1) selon l'une quelconque des revendications 1 à 6, **caractérisé en ce qu'**il comporte une bielle de direction (10) dont une première extrémité (101) est montée pivotante sur une extrémité arrière (34) du porte-fusée.

8. Train arrière (1) selon la revendication 7, **caractérisé en ce qu'**il comporte un actionneur (11) commandant le déplacement de la bielle de direction (10) pour commander le pivotement du porte-fusée.

9. Train arrière (1) selon l'une quelconque des revendications précédentes, **caractérisé en ce qu'**il comporte un arbre moteur (12) pour entraîner la roue arrière en rotation.

10. Véhicule automobile à quatre roues directrices, **caractérisé en ce qu'**il comporte un train arrière (1) selon l'une quelconque des revendications 7 à 9.

## Patentansprüche

1. Hinterachse (1) eines Kraftfahrzeugs, die Folgendes umfasst:
- mindestens einen Längslenker (5), der ein vorderes Ende umfasst, das über ein im Wesentlichen quer verlaufendes Achsgelenk verfügt, das dazu bestimmt ist, an einem Fahrgestell des Fahrzeugs montiert zu sein,
- mindestens einen Achsschenkel (3) und ein damit assoziiertes Hinterrad (2), wobei der Achsschenkel das Hinterrad um eine im Wesentlichen quer verlaufende Achse (2A) drehbar trägt,
- eine Verbindungsstruktur, die einen unteren Querlenker (6) und einen oberen Querlenker (7) umfasst, wobei jeder Lenker ein erstes Gelenk (61, 71), das ihn mit dem Achsschenkel (3) verbindet, und ein zweites Gelenk (62, 72), das dazu bestimmt ist, ihn mit dem Fahrgestell (4) des Fahrzeugs zu verbinden, umfasst,
- wobei ein hinteres Ende (52) des Längslenkers an einem vorderen Ende (31) des Achsschenkels schwenkbar montiert ist,
- wobei das erste Gelenk (61) des unteren Lenkers durch eine Stange (8) mit einem oberen Ende (32) des Achsschenkels verbunden ist und
- wobei der untere Lenker (6) durch ein drittes Gelenk (63), das sich vor einer Geraden befindet, die durch sein erstes und zweites Gelenk (61, 62) definiert wird, mit einem unteren Ende (33) des Achsschenkels verbunden ist, wobei die Hinterachse **dadurch gekennzeichnet ist, dass** dieses dritte Gelenk (63) nur den unteren Lenker (6) mit dem Achsschenkel (3) verbindet.

2. Hinterachse (1) nach Anspruch 1, **dadurch gekennzeichnet, dass** der untere (6) und der obere (7) Lenker so positioniert sind, dass sich in einer unbeladenen Nutzungsposition der Hinterachse, wenn diese in einem Fahrzeug montiert ist, ein Schnittpunkt zwischen einer Schwenkachse (2B), die durch das erste Gelenk (71) des oberen Lenkers und das dritte Gelenk (63) des unteren Lenkers verläuft, und dem Boden in einem Bereich befindet, der sich 20 bis 60 mm hinter dem Kontaktpunkt des Hinterrades mit dem Boden befindet.

3. Hinterachse (1) nach Anspruch 1 oder 2, **dadurch gekennzeichnet, dass** sich die Stange (8) im Wesentlichen vertikal erstreckt.

4. Hinterachse (1) nach einem beliebigen der Ansprüche 1 bis 3, **dadurch gekennzeichnet, dass** die Stange (8) durch elastische Gelenke mit dem Achsschenkel und dem unteren Lenker (6) verbunden ist.

5. Hinterachse (1) nach einem beliebigen der Ansprüche 1 bis 4, **dadurch gekennzeichnet, dass** der Längslenker (5) von oben gesehen eine Bogenform aufweist, deren Konkavität sich auf der Seite des Hinterrades (2) befindet.

6. Hinterachse (1) nach einem beliebigen der Ansprüche 1 bis 5, **dadurch gekennzeichnet, dass** das hintere Ende (52) des Längslenkers durch mindestens ein im Wesentlichen vertikales Achsgelenk (54) mit dem vorderen Ende (31) des Achsschenkels verbunden ist.

7. Hinterachse (1) nach einem beliebigen der Ansprüche 1 bis 6, **dadurch gekennzeichnet, dass** sie eine Lenkstange (10) umfasst, von der ein erstes Ende (101) an einem hinteren Ende (34) des Achsschenkels schwenkbar montiert ist.

8. Hinterachse (1) nach Anspruch 7, **dadurch gekennzeichnet, dass** sie einen Aktor (11) umfasst, der die Bewegung der Lenkstange (10) steuert, um das Schwenken des Achsschenkels zu steuern.

9. Hinterachse (1) nach einem beliebigen der vorhergehenden Ansprüche, **dadurch gekennzeichnet, dass** sie eine Antriebswelle (12) umfasst, um das Hinterrad drehanzutreiben.

10. Kraftfahrzeug mit vier gelenkten Rädern, **dadurch gekennzeichnet, dass** es eine Hinterachse (1) nach einem beliebigen der Ansprüche 7 bis 9 umfasst.

## Claims

1. Motor vehicle rear axle (1) comprising:
- at least one longitudinal arm (5) comprising a front end provided with an articulation having a substantially transverse axis and intended to be mounted on a chassis of the vehicle,
- at least one steering knuckle (3) and an associated rear wheel (2), the steering knuckle bearing the rear wheel in rotation about a substantially transverse axis (2A),
- a connection structure comprising a transverse lower arm (6) and a transverse upper arm (7), each arm comprising a first articulation (61, 71) connecting it to the steering knuckle (3), and a second articulation (62, 72) intended to connect it to the chassis (4) of the vehicle,
- a rear end (52) of the longitudinal arm being pivotably mounted on a front end (31) of the steering knuckle,
- the first articulation (61) of the lower arm being connected to an upper end (32) of the steering knuckle by a link (8), and
- the lower arm (6) being connected to a lower end (33) of the steering knuckle by a third articulation (63) situated in front of a straight line defined by its first and second articulations (61, 62), said rear axle being **characterized in that** this third articulation (63) connects only the lower arm (6) to the steering knuckle (3) .

2. Rear axle (1) according to Claim 1, **characterized in that** the lower (6) and upper (7) arms are positioned in such a way that a point of intersection between a pivot axis (2B), passing through the first articulation (71) of the upper arm and the third articulation (63) of the lower arm, with the ground is in a region situated 20 to 60 mm to the rear of the point of contact of the rear wheel on the ground, in an unladen use position of the rear axle when the latter is mounted in a vehicle.

3. Rear axle (1) according to Claim 1 or 2, **characterized in that** the link (8) extends substantially vertically.

4. Rear axle (1) according to any one of Claims 1 to 3, **characterized in that** the link (8) is connected to the steering knuckle and to the lower arm (6) by elastic articulations.

5. Rear axle (1) according to any one of Claims 1 to 4, **characterized in that** the longitudinal arm (5) has, as seen from above, an arcuate shape whose concavity is situated on the rear wheel (2) side.

6. Rear axle (1) according to any one of Claims 1 to 5, **characterized in that** the rear end (52) of the longitudinal arm is connected to the front end (31) of the steering knuckle by at least one articulation (54) having a substantially vertical axis.

7. Rear axle (1) according to any one of Claims 1 to 6, **characterized in that** it comprises a steering rod (10) of which a first end (101) is pivotably mounted on a rear end (34) of the steering knuckle.

8. Rear axle (1) according to Claim 7, **characterized in that** it comprises an actuator (11) which controls the movement of the steering rod (10) to control the pivoting of the steering knuckle.

9. Rear axle (1) according to any one of the preceding claims, **characterized in that** it comprises a drive shaft (12) for driving the rear wheel in rotation.

10. Motor vehicle having four steered wheels, **characterized in that** it comprises a rear axle (1) according to any one of Claims 7 to 9.
